# EUROPEAN PATENT SPECIFICATION

(11) **EP 1 851 143 B1**
(45) Date of publication and mention of the grant of the patent: **13.08.2008**
(21) Application number: 06799742.9
(22) Date of filing: 09.10.2006
(51) Int. Cl.: B65G 45/12, B29C 70/68

(54) **SCRAPER BLADE AND METHOD OF MANUFACTURING THE SAME**
RAKELBLATT UND HERSTELLUNGSVERFAHREN DAFÜR
LAME DE RACLAGE ET PROCEDE POUR SA FABRICATION

(30) Priority: 07.10.2005 SE 0502200
(43) Date of publication of application: 07.11.2007
(73) Proprietor: Metso Minerals (Wear Protection) AB, 231 21 Trelleborg (SE)
(72) Inventor: ABRAHAM, Robert, 231 55 Trelleborg (SE); GRÖNVALL, Lars, 231 55 Trelleborg (SE)
(74) Representative: Milanov, Nina Vendela Maria
(86) International application number: PCT/SE2006/001142
(87) International publication number: WO 2007/043944

(56) References cited:
- EP-A1- 0 893 376
- EP-A1- 1 000 881
- EP-A1- 1 323 649
- GB-A- 792 516
- GB-A- 1 454 763
- GB-A- 2 042 454
- GB-A- 2 081 662
- US-A- 4 696 388
- US-B2- 6 619 469

## Description

### Field of the Invention

The present invention relates to a scraper blade for use in particular as a conveyor belt scraper.

### Background Art

SE-B-468 390 and its equivalent US-A-5 197 587 disclose a scraper blade which is adapted to be used in a conveyor belt scraping device. This scraper is made of a homogeneous elastomeric or plastic material and is provided with an inner stiffening in the form of a sheet-metal piece which is inserted into a groove in the scraper. For some applications, this type of homogeneous scraper has, however, been found to have insufficient abrasion resistance. Furthermore the stiffening sheet-metal piece causes troubles when destructing the scraper since the materials have to be separated.

A similar scraper is disclosed in EP-A-0 893 376. This scraper has an inner stiffening corresponding to the detachable stiffening in the scraper according to the above-mentioned document. Otherwise it is similar, that is the active scraper tip is made of a homogeneous material. Therefore also this scraper is not quite optimal for said applications.

EP-A-0 573 688 also discloses a conveyor belt scraper with a tip, which is made of a homogeneous material and which in use is subjected to heavy abrasion and therefore is mounted to be exchangeable.

Various suggestions have been made to increase the abrasion resistance. A few suggestions are presented in US-A-6 082 524, EP-A-0 566 486 and US-A-5 692 595, where the tip of the scraper is formed with a hard metal insert. However, this solution causes unnecessary wear on the surface which is being scraped by means of the scraper. The solution may also cause sparking and contamination of the material conveyed on the conveyor belt.

GB-A-1 454 763 discloses a scraper blade which is made of a two-layer laminate, in which one layer is made of an elastomeric material of a softer grade to provide effective scraping and the other layer is made of a harder grade to constitute a support for the softer layer. In use, the scraper blade can be mounted either in such a manner that the harder layer is turned forward or in such a manner that the softer layer is turned forward. The latter mounting is preferred if the scraper is used to scrape off wet material. In the shown embodiment, the scraper blade is arranged perpendicular to the surface that is to be scraped. If the scraper is used as a prescraper for scraping a curved surface and therefore the scraper blade is oriented obliquely to this surface, there is a great risk that the layer of soft material forms a thin lip which does not come loose and which impairs the result of scraping.

The latter problem has been observed in US-A-4 658 949, which discloses a different technique of maintaining a substantially constant scraper tip, that is preventing the outer end of the pointed scraper from bending outwards from the scraped surface and thus wholly or partly losing its scraping capacity. This prior art technique is based on the concept of providing the outside of the scraper with fracture lines in the form of cutting-lines or narrow notches which extend a distance into the scraper from the outside thereof so that the tip, when worn out to a certain degree, is simply broken off so as to uncover a new effective scraper blade portion. A drawback of this prior art construction is that the fracture lines cause weakening of the scraper and that the new tip will be blunt.

SE-A-519 267 and its equivalent US-B-6 619 469 discloses a scraper blade consisting of two elastomeric or plastic materials with different hardnesses and abrasion resistances, the material with a higher hardness and a lower abrasion resistance facing the base to be scraped and the other material constituting the scraper tip.

A frequent problem in prior art thus is how to best manufacture a scraper blade which has a long useful life and at the same time optimum scraping properties.

### Summary of the Invention

An object of the present invention is to provide a new scraper blade which has both a longer useful life and a better scraping effect than the above-mentioned known scraper blades. A further object of the invention is to provide a scraper blade which due to its construction better maintains its scraping effect and better maintains the shape of the effective scraper tip. Furthermore the invention intends to provide a laminated scraper blade with a combination of materials which ensures manufacture of scraper blades which is reliable in operation and in terms of quality and also cost-effective, and ensures cost-effective destruction as well.

These and other advantages are achieved by a scraper blade according to claim 1 which in all essentials comprises a scraper blade made of polyurethane (PU) comprising a longitudinal reinforcement of a polycarbonate (PC).

In brief, the invention concerns a scraper blade with a scraper tip at one end and a mounting base at its other end. The scraper tip is outwardly tapered.

Polycarbonate as reinforcement/stiffening makes it possible to use a larger amount of hardwearing (soft PU) material in the scraper than previously allowed with plastic and/or elastomeric materials. The scraping efficiency is determined by the contact surface against the belt, and with a larger contact surface, efficiency increases. Moreover, the life is prolonged by the fact that an increased amount of hardwearing material is available, both in the wearing surface and in the scraper as a whole. This is a great advantage that is not mentioned in prior art.

Since the PC material functions not only as reinforcement/stiffening but also as scraper material, it can be used along the entire length of the scraper, in contrast to, for instance, metal reinforcements, which for various reasons should not contact the conveyor belt. For example, such a contact may cause sparking, damage to the web of material, contamination of the material conveyed on the belt, etc. An uneven scraping surface caused by corrosion of the material has also been observed in the case of metal reinforcements.

The combination of PU and PC has also, in the Applicant's evaluations, presented excellent properties in terms of adhesion between the materials. While the combination of PU/PU in manufacture is quite time dependent, which means that introduction of the second amount of PU on the wrong occasion may result in unsuccessful adhesion, bonding between PC and PU occurs when adding the hot PU, which ensures adhesion which is reliable in terms of production technology and also is repeatable. The properties allow that production of components may take place without connection in time and space.

A PC reinforcement/stiffening has additional advantages in use, compared with other prior art plastic reinforcements since it constitutes an "aggressively" flexible material. When scraping material from a conveyor belt, the scraper blade is subjected to heavy impacts of the material on the conveyor belt. Plastic and polyurethane reinforcements according to prior art are slow in reaction, which means that after an impact it takes some time before they engage the conveyor belt again. This time is much shorter for a scraper blade containing a PC reinforcement.

The embodiment in which a core of PU is sandwiched between two layers of PC prevents the forming of a lip that otherwise may occur when using a hardwearing, soft material, in which case an even softer and more hardwearing material can be used for the core. The lip, or the "burr", is formed on the scraper since the soft material is so soft that it is not torn off. The arrangement of two hard outer materials eliminates this problem.

In a preferred embodiment, the PC layer is prebent, which makes it possible to provide a bias against the base to be scraped. This bias makes it possible to eliminate biasing means arranged on the scraper system, which gives advantages in terms of cost and use.

In the present invention, the harder material should, however, have a lower abrasion resistance to be worn off more quickly, thus continuously maintaining a flexible scraper lip of softer material in contact with the scraped-off surface.

Typical hardnesses of the softer polyurethane are 50-95° Shore A, and in general more preferably about 70° Shore A. For embodiments where the polycarbonate constitutes a load-bearing structure, softer and more abrasion resistant polyurethane may be used, in the range around 50° Shore A. The harder polycarbonate material preferably has a hardness of 120-124 Rockwell R corresponding to about 75-85° Shore D. In experiments, these hardness ranges have been found to give good advantages in terms of use.

An inventive method of manufacturing a scraper blade comprises the steps of:
- arranging reinforcement/stiffening of polycarbonate plastic in a casting mould,
- at an optional point of time after arranging the polycarbonate plastic, supplying polyurethane to said casting mould, the polyurethane binding to the polycarbonate plastic reinforcement,
to provide a coherent structure.

The stiffening is fixed to the casting mould in a suitable manner, and the mould is preferably preheated before being supplied with PU.

The inventive method is preferably used to manufacture an inventive scraper.

### Brief Description of the Drawings

A few examples of a scraper blade according to the present invention will be described in more detail with reference to the accompanying drawings, in which
Fig. 1 is a section through a conveyor belt scraping device with a first example of a scraper blade according to the invention,
Fig. 2 is a perspective view of such a device,
Fig. 3a is an end view of a second example of a scraper blade according to the invention,
Fig. 3b is a side view of the scraper blade shown in Fig. 3a,
Fig. 4 shows a third example of a scraper blade according to the invention,
Fig. 5 shows a fourth example of a scraper blade according to the invention,
Fig. 6 shows a fifth example of a scraper blade according to the invention, and
Fig. 7 shows a sixth example of a scraper blade according to the invention.

### Detailed Description of Preferred Embodiments

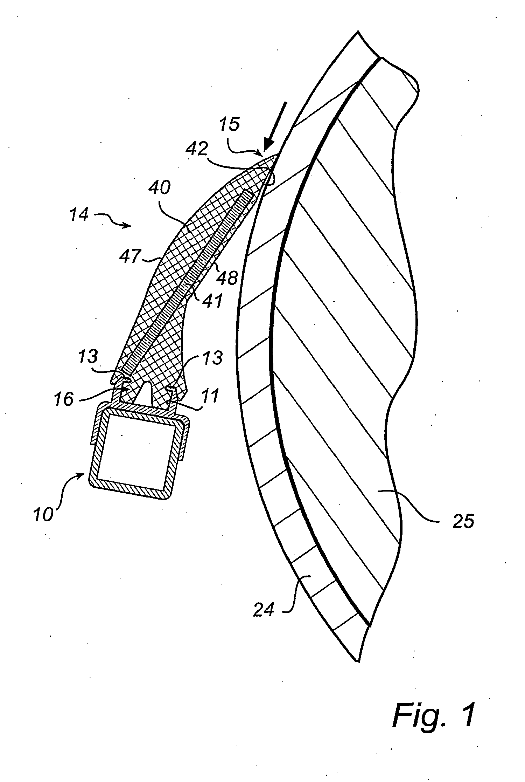

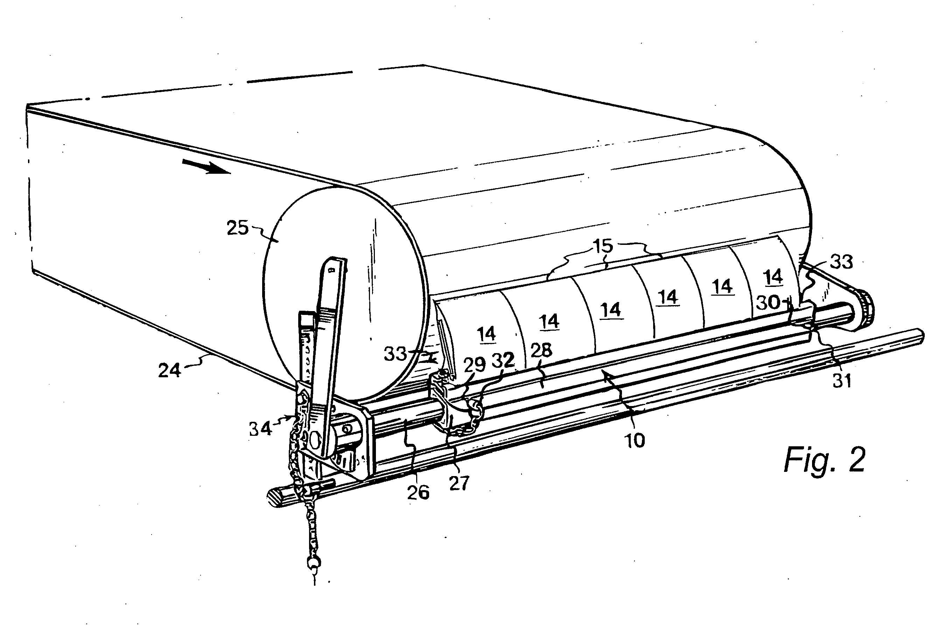

The conveyor belt scraping device in Figs 1 and 2 is in all essentials designed as stated in SE-B-468 390 and its equivalent US-A-5 197 587. For the sake of simplicity, the same reference numerals are therefore used for equivalent components. However, instead of the scraper blade or scraper blades shown in these documents, a scraper blade according to the present invention is used.

As is evident from Fig. 1, the belt scraping device is mounted so that the tip 15 of the scraper is pressed against the conveyor belt 24 as this passes around the belt drum 25 which rotates counter-clockwise with respect to Fig. 1. The pressing of the belt scraper against the conveyor belt can take place in the usual way by means of devices which are not shown in more detail in Fig. 1 and which yieldingly press the belt scraper against the conveyor belt and strive to move the scraper tip 15 to the right in Fig. 1. These devices not shown in detail may consist of pneumatic or hydraulic devices, spring devices or other mechanical devices. In the embodiment according to Fig. 2, mechanical devices 34 are shown for pivoting and pressing the belt scraper against the conveyor belt.

In Fig. 2, the carrier element is made of two parts, on the one hand a rotatable shaft 26 and a square tube 27 rigidly attached thereto and, on the other hand, a holding element 28 which is easy to mount on and dismount from the square tube and in which the undercut mounting groove 11 is formed. The holding element 28 with scraper blades mounted thereon can thus easily and quickly be mounted and dismounted as a single unit. In this example, this is made possible by the holding element 28 having at one end holes 29, which, with the holding element mounted, are positioned just opposite corresponding holes in the square tube 27, and by the holding element at its other end having axially directed grooves 30 which are formed in the flanges of the holding element and which, with the holding element mounted, grasp projecting pins 31 on the square tube 27. To hold the holding element, use is also made of a cotter pin 32 which is inserted through the holes 29 and corresponding holes in the square tube.

In the embodiment according to Fig. 2, there are also stop screws 33 which are fastened in the holding element 28 and which prevent the scraper blades 14 from being unintentionally moved in the longitudinal direction of the holding element 28.

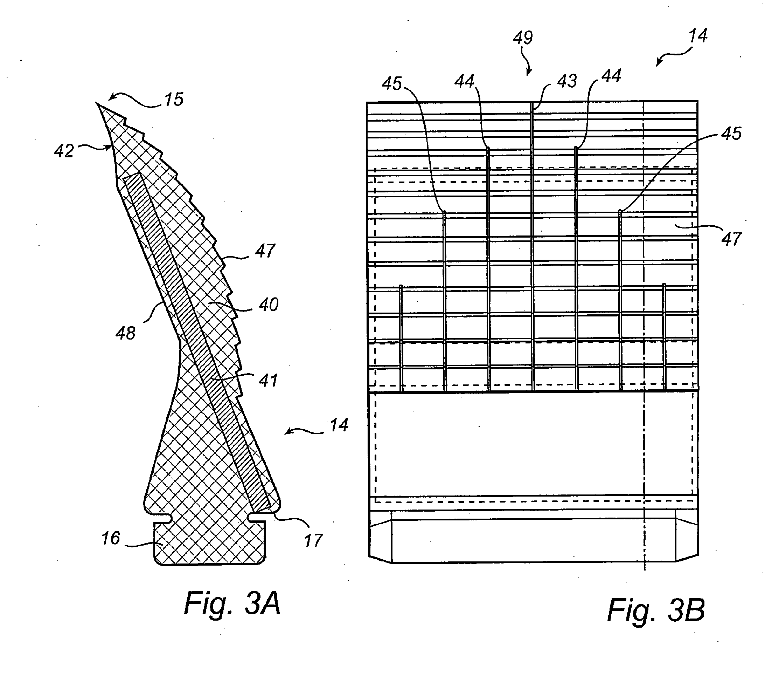

A scraper blade according to a variant of a first embodiment is shown in Fig. 3. Apart from the construction of the scraper blade in respect of material and layer structure, it is built in prior art manner. The mounting base 16 with its gripping groove 17 is formed in prior art manner in a base portion of the scraper, according to the above-mentioned prior art technique of the same Applicant, to be held by the supporting beam 10 designed in prior art manner, with its undercut mounting groove 11 which has inwardly directed flanges 13.

The function of this fastening device and the associated control is described in the above-mentioned patent application and will thus not be described in more detail.

In the first embodiment, the scraper blade 14 has an outer cover 40 of a soft hardwearing PU material with a plate 41 of PC, fixed by casting, extending substantially throughout the transverse direction of the scraper relative to the conveyor belt in a position of use. As will be seen, the mounting base is in this case made of PU material.

The fact that the mounting base 16 is made of the same PU material as the outer cover 40 is a simplifying solution in terms of manufacture since it means that no additional component has to be added to the scraper blade 14. However, this should not be interpreted as limiting to the inventive scraper blade, which is emphasised by an embodiment that will be described below.

Moreover, the PC plate 41 extends substantially from the base of the scraper to the tip of the scraper and is arranged in such a manner that, after initial wear, it will, during the time of use of the scraper, constitute a part of a surface 42 abutting against the conveyor belt. The plate 41 abuts substantially against the subjacent supporting beam 10 to provide a support in use in the longitudinal direction of the scraper.

Moreover the scraper 14 comprises a wear indicator 49 which, while showing a user how worn down the scraper is, also indicates whether the scraper is correctly mounted in its holder or not. In the embodiment illustrated, the wear indicator 49 comprises a total of seven grooves 43-46 arranged on the side of the scraper 14 which in a position of use is facing away from the conveyor belt, to allow easy reading of the indicator 49 in a position of use. The grooves 43-46 extend in a direction away from the base of the scraper to its tip 15. The intermediate groove 43 extends all the way up to the tip, and the other grooves 44-46 are arranged symmetrically and in pairs around this intermediate groove and have an extent which decreases with the distance from the intermediate groove 43. If the scraper is correctly mounted, first one groove will be visible in use, when looking at the tip of the scraper. After use for some time, the wear reaches the first neighbouring pair of grooves, 44, which means that three grooves will be visible, then five, seven and so forth. If the scraper 14 is correctly mounted, an odd number of grooves will always be visible at the tip of the scraper. However, if the scraper is obliquely mounted, the wear will also be uneven, which results in an even number of grooves becoming visible. This wear indicator 49 will thus be useful for the user, both in use and to effectively communicate how far the wear has proceeded. The Applicant anticipates that a wear indicator which functions according to these principles is useful in several fields in general and for several scraper types in particular.

In the inventive scraper blade, the harder and more rigid PC layer 41 is used as a reinforcing and stiffening layer for maintaining a contact pressure when the scraper blade in a position of use has been pivoted against the conveyor belt. To some extent, the PC layer 41 also serves as a scraper layer since it is more abrasion resistant than, for example, a PU layer with a corresponding hardness.

The layer 40 is the actual main scraper layer and this constitutes the major part of the contact surface 42 against the conveyor belt and thus forms the effective scraper tip of the scraper blade 14. This layer advantageously has a hardness from about 50° Shore A to about 95° Shore A, or more preferably from about 65° Shore A to about 95° Shore A.

By making the scraper tip of a material which has a higher softness and a higher abrasion resistance than the material of the stiffening layer 41, the stiffening layer 41 will be subjected to intentional "excessive wear", that is it will be worn more quickly than the layer 40. This has been found to result in a significantly better scraping effect and a longer life of the scraper blade.

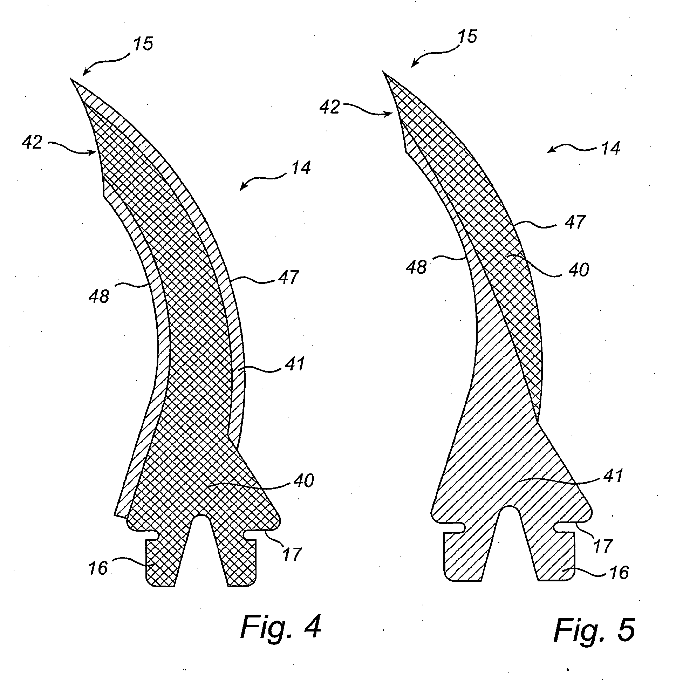

Fig. 4 shows a second embodiment of the invention. Here a core 40 of the scraper blade and the mounting base consist of a continuous PU material, while the PC reinforcement/stiffening 41 is arranged on the upper side and underside of the scraper blade and extends from the tip of the scraper down to the mounting base. This sandwich construction combined with the good properties of the materials makes it possible to manufacture a scraper blade 14 with good scraping properties while using relatively small amounts of materials.

Fig. 5 shows a third embodiment of the present invention. In this embodiment, the mounting base 16 and the long side which in use faces the conveyor belt are made of the same PC component 41. A main scraper layer 40 of PU is arranged on the opposite long side of the scraper blade 14. In the construction, the PC component 41 is self-supporting, and therefore a still softer and more abrasion resistant PU material can be used for the scraper layer 40. Also layers that are softer than the above-mentioned 50° Shore A are anticipated.

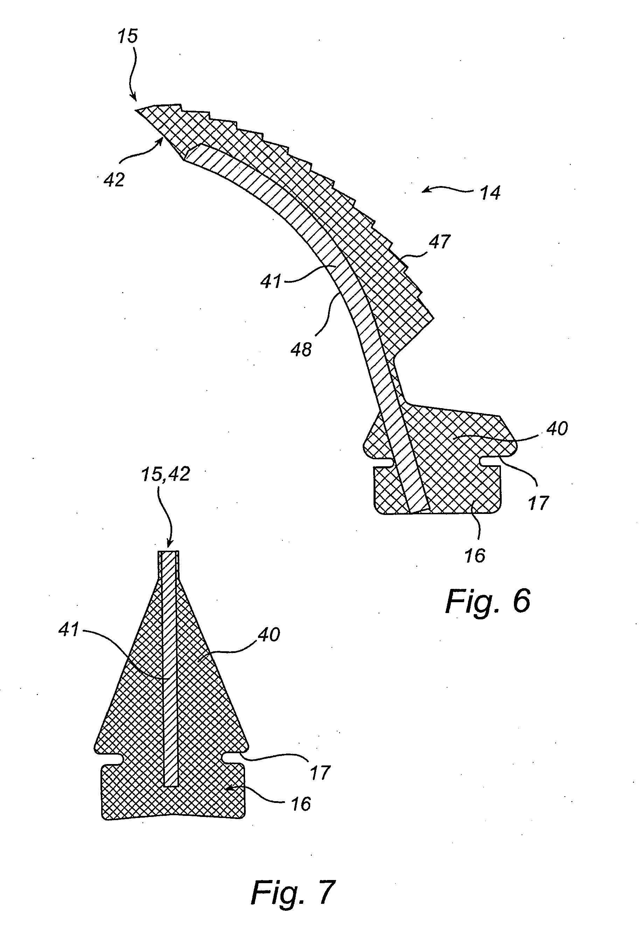

Fig. 6 illustrates a scraper blade according to a fourth embodiment of the present invention. This embodiment is a result of the good properties of the polycarbonate plastic in terms of flexibility. This embodiment resembles to some extent a combination of the first and the second embodiment. An insert 41 of prebent PC material extends from the essential tip 15 of the scraper blade 14 along the scraper blade long side which in use faces the conveyor belt 24. At the base of the scraper blade, the plate 41 extends down in the mounting base 16 and terminates in the substantially lowermost part of the mounting base in order to benefit, in use, by the stabilising effect of the supporting beam 10 and its undercut mounting groove 11 with inwardly directed flanges 13. A main scraper layer 40 and also the mounting base 16 are, like before, made of polyurethane. In use, the scraper blade 14 is arranged biased against the conveyor belt 24. Due to the design of the PC plate 41, no additional clamping device (see 24 in Fig. 2) is required to press the scraper blade against the conveyor belt. As a result, a scraper system comprising a scraper according to this embodiment will have a reduced weight, will be easier to mount and saves place compared with prior art systems.

Fig. 7 illustrates a scraper blade according to a fifth embodiment of the present invention. In this case a scraper known as a fine scraper of a traditional appearance has received a stiffening insert 41 of polycarbonate plastic. The purpose of a fine scraper is to remove residues of finely divided material left on the belt. The scraper has a scraper body, substantially made of polyurethane 40, comprising a mounting base 16 similar to the one described above and is, in cross-section, in the longitudinal direction of the conveyor belt symmetrically tapered upwards to a tip 15 which constitutes a contact surface 42 against the base that is to be scraped. From the tip 15 of the scraper and down to the mounting base 16 extends the stiffening plate 41 of polycarbonate plastic. Compared with scrapers of prior art type, which generally have hard metal inserts, the inventive scraper is more flexible and kinder to the conveyor belt. When scraping off wet products, the scraper thus functions like a spatula and effectively and smoothly removes products from the conveyor belt.

As described in previous patent applications, the outwardly directed side of the layer may be differently designed to obtain the desired advantages in terms of use. For instance, the stepped shape as shown in Figs 3a and 6 may be used. It goes without saying that the described wear indicator can be formed with more or fewer grooves without departing from the inventive idea, and the grooves need not necessarily be rectilinear like those shown in the figure.

It should also be noted that in the context of the present invention polycarbonate plastic relates generally to polycarbonate (PC) and PC alloys such as combinations of PC and ABS, PC and PBT, PC and ASA, PC and SMA, as well as PC and PMMA and also polycarbonate plastic derivatives.

## Claims

1. A scraper blade adapted to scrape off material from a conveyor belt surface (24) and having a scraper tip (15) at one end and a mounting base (16) at its other end and being tapered towards the tip at least in the outer end of the scraper blade (14), its scraper blade portion which extends from the tip (15) and to a point adjacent to or in the mounting base (16) being made with at least two layers (40, 41) which extend longitudinally along said scraper blade portion, **characterised in that** at least one first layer (40) is made of polyurethane with a lower hardness and a higher abrasion resistance than at least one second layer (41) which is mainly made of polycarbonate plastic, said at least one second polycarbonate plastic layer (41) being adapted to reinforce and stiffen said at least one first layer (40), which constitutes a main contact surface (42) against said surface (24).

2. A scraper blade as claimed in claim 1, wherein the second layer (41) is made of polycarbonate plastic.

3. A scraper blade as claimed in claim 1 or 2, in which the stiffening polycarbonate plastic layer (41) is substantially enclosed by polyurethane (40).

4. A scraper blade as claimed in claim 1 or 2, in which the polycarbonate plastic layer (41) extends along a long side (47, 48) of the scraper blade (14), said long side facing away from and/or facing the conveyor belt, and the polyurethane layer constitutes a main core (40).

5. A scraper blade as claimed in any one of the preceding claims, wherein the polycarbonate plastic layer (41) is prebent to provide a bias against the surface that is to be scraped.

6. A scraper blade as claimed in any one of the preceding claims, in which the tip (15) is bevelled in such a manner to be pressed at an oblique angle against the surface (24) to be scraped that the major part of the contact surface (42) is formed of the softer, more abrasion resistant material layer (40).

7. A scraper blade as claimed in any one of the preceding claims, in which the material of said at least one first layer (40) has a hardness from 50° Shore A, preferably from 65° Shore A, to 95° Shore A, and the material of said at least one second layer (41) has a hardness from 75° Shore D to 85° Shore D.

8. A scraper blade as claimed in claim 7, in which the material of said at least one first layer (40) has a hardness of about 70° Shore A.

9. A scraper blade as claimed in claim 7, in which the material of said at least one first layer (40) has a hardness of about 78° Shore A.

10. A scraper blade as claimed in claim 7, 8 or 9, in which the material of said at least one second layer (41) has a hardness corresponding to about 80° Shore D.

11. A scraper blade as claimed in any one of the preceding claims, in which the scraper blade portion is made with two layers (40, 41), and the layer (40) which, in use of the scraper blade, is adapted to form the actual scraper tip (15) and is positioned farthest away from the surface (24) to be scraped, has a stepped or serrated outer surface (47).

12. A scraper blade as claimed in any one of claims 1-2 and 4-8, in which said scraper blade portion has three layers (40, 41), of which the layer (40) which, in use of the scraper blade, is adapted to form the actual scraper tip (15) is laminated between two layers (41), of which the layer (41) which, in use of the scraper blade, is adapted to face the surface (24) that is to be scraped, is made of the material with a lower abrasion resistance and a higher hardness than the material of the layer (40) which is adapted to form the actual scraper tip (15), and of which the layer which, in use of the scraper blade, is adapted to be positioned farthest away from the surface (24) to be scraped, is made of the material which either has a lower abrasion resistance and a higher hardness than the material of the actual scraper tip (15) or is brittle and has a lower abrasion resistance than the material of the actual scraper tip (15).

13. A scraper blade as claimed in any one of the preceding claims, further comprising a wear and alignment indicator (49).

14. A scraper blade as claimed in claim 13, in which the wear and alignment indicator comprises a number of grooves (43-46) arranged on the scraper blade (14) in a direction from its mounting base (16) to its tip (15), at least two of the terminal points of the grooves adjacent to the tip (15) of the scraper blade being arranged at the same distance from said tip (15).

15. A method of manufacturing scraper blades for scraping webs of material, comprising the steps of
a: arranging reinforcement/stiffening of polycarbonate plastic in a casting mould,
b: at an optional point of time after arranging the polycarbonate plastic, supplying polyurethane to said casting mould, the polyurethane binding to the polycarbonate plastic reinforcement,
to provide a coherent structure.

16. A method as claimed in claim 15, intended for manufacturing a scraper blade as claimed in any one of claims 1-14.

## Patentansprüche

1. Rakelblatt, angebracht zum Abstreifen von Material von einer Fließbandoberfläche (24) mit einer Abstreifspitze (15) an einem Ende und einer Montageplatte (16) am anderen Ende, und sich zur Spitze hin verjüngend, zumindest am äußeren Rand des Rakelblatts (14), wobei der Rakelblattabschnitt sich von der Spitze (15) zu einem Punkt angrenzend an oder in der Montageplatte (16) erstreckt, der aus wenigstens zwei Lagen (40, 41) besteht, die sich in Längsrichtung entlang des Rakelblattabschnitts erstrecken, **dadurch gekennzeichnet, dass** wenigstens eine erste Lage (40) aus Polyurethan einer geringeren Härte und einem höheren Abriebwiderstand besteht als wenigstens eine zweite Lage (41), die hauptsächlich aus Polycarbonatkunststoff besteht, und diese wenigstens eine Polycarbonatkunststofflage (41) angebracht ist, um die wenigstens eine erste Lage (40) zu verstärken und auszusteifen, was eine Hauptkontaktfläche (42) gegenüber der Oberfläche (24) bildet.

2. Rakelblatt gemäß Anspruch 1, wobei die zweite Lage (41) aus Polycarbonatkunststoff besteht.

3. Rakelblatt gemäß Anspruch 1 oder 2, wobei die aussteifende Polycarbonatkunststofflage (41) im Wesentlichen von Polyurethan (40) umhüllt ist.

4. Rakelblatt gemäß Anspruch 1 oder 2, wobei die Polycarbonatkunststofflage (41) sich entlang einer Längsseite (47, 48) des Rakelblatts (14) erstreckt, und die Längsseite dem Fließband abgewandt und/oder zugewandt ist, und die Polyurethanlage einen Hauptkern (40) bildet.

5. Rakelblatt gemäß einem der vorhergehenden Ansprüche, wobei die Polyurethankunststofflage (41) vorgeformt ist, um eine Vorspannung gegen die abzustreifende Oberfläche zu bieten.

6. Rakelblatt gemäß einem der vorhergehenden Ansprüche, wobei die Spitze (15) derart abgeschrägt ist, um in schrägem Winkel gegen die abzustreifende Oberfläche (24) gepresst zu werden, dass der Hauptteil der Kontaktfläche (42) aus der weicheren, abriebfesteren Materiallage (40) gebildet ist.

7. Rakelblatt gemäß einem der vorhergehenden Ansprüche, wobei das Material der wenigstens einen ersten Lage (40) eine Härte von ab 50° Steifheit A, vorzugsweise ab 65° Steifheit A, bis 95°, Steifheit A aufweist, und das Material der wenigstens einen zweiten Lage (41) eine Härte von ab 75°, Steifheit D bis 85° Steifheit D aufweist.

8. Rakelblatt gemäß Anspruch 7, wobei das Material der wenigstens einen ersten Lage (40) eine Härte von etwa 70° Steifheit A aufweist.

9. Rakelblatt gemäß Anspruch 7, wobei das Material der wenigstens einen ersten Lage (40) eine Härte von etwa 78° Steifheit A aufweist.

10. Rakelblatt gemäß Anspruch 7, 8 oder 9, wobei das Material der wenigstens einen zweiten Lage (41) eine Härte von etwa entsprechend 80° Steifheit D aufweist.

11. Rakelblatt gemäß einem der vorhergehenden Ansprüche, wobei der Rakelblattabschnitt mit zwei Lagen (40, 41) gemacht ist, und die Lage (40), die zur Benutzung des Rakelblatts angebracht ist, um die eigentliche Abstreifspitze (15) zu bilden, und am weitesten von der abzustreifenden Oberfläche (24) entfernt ist, eine gestufte oder gekerbte Außenfläche (47) aufweist.

12. Rakelblatt gemäß einem der vorhergehenden Ansprüche 1 - 2 und 4 - 8, wobei der Rakelblattabschnitt drei Lagen (40, 41) hat, und die Lage (40), die zur Benutzung des Rakelblatts angebracht ist, um die eigentliche Abstreifspitze (15) zu bilden, zwischen zwei Lagen (41) laminiert ist, wovon die Lage (41), die zur Benutzung des Rakelblatts der abzustreifenden Oberfläche (24) zugewandt ist, aus dem Material mit einem geringeren Abriebwiderstand und höherer Härte gemacht ist, als das Material der Lage (40), die angebracht ist, um die eigentliche Abstreifspitze (15) zu bilden, und wovon die Lage, die zur Benutzung des Rakelblatts so angebracht ist, dass sie am weitesten von der abzustreifenden Oberfläche (24) entfernt ist, aus dem Material gemacht ist, das entweder einen geringeren Abriebwiderstand und höhere Härte aufweist, als das Material der eigentlichen Abstreifspitze (15) oder spröde ist und einen geringeren Abriebwiderstand aufweist als das Material der eigentlichen Abstreifspitze (15).

13. Rakelblatt gemäß einem der vorhergehenden Ansprüche, zusätzlich umfassend einen Abnutzungs- und Einstellindikator (49).

14. Rakelblatt gemäß Anspruch 13, wobei der Abnutzungs- und Einstellindikator eine Anzahl von Rillen (43 - 46) umfasst, die auf dem Rakelblatt (14) in einer Richtung angeordnet sind, von der Montageplatte (16) zur Spitze (15), mit wenigstens zwei der Ausgangspunkte der Rillen angrenzend an die Spitze (15) des Rakelblatts, in gleichem Abstand zu der Spitze (15).

15. Verfahren zur Herstellung von Rakelblättern zum Abstreifen von Materialansammlungen, umfassend die Schritte:
a: Herstellung einer Verstärkung/ Aussteifung von Polycarbonatkunststoff in einer Gussform;
b: zu einem optionalen Zeitpunkt nach Herstellung des Polycarbonatkunststoffs, die Einbringung des Polyurethans in die Gussform, wobei das Polyurethan sich zu der Polycarbonatkunststoffverstärkung verbindet, um einen kohärenten Aufbau zu bilden.

16. Verfahren gemäß Anspruch 15, zur Herstellung eines Rakelblatts gemäß einem der Ansprüche 1 - 14.

## Revendications

1. Lame de raclage adaptée à racler un matériau depuis une surface (24) d'une courroie de convoyeur et ayant un embout de raclage (15) à une extrémité et une base de montage (16) à son autre extrémité, et présentant une forme effilée en direction de l'embout au moins dans l'extrémité extérieure de la lame de raclage (14), la portion de la lame de raclage qui s'étend depuis l'embout (15) jusqu'à un point adjacent à la base de montage (16) ou jusque dans celle-ci étant réalisée avec au moins deux couches (40, 41) qui s'étendent longitudinalement le long de ladite portion de la lame de raclage, **caractérisée en ce qu'**au moins une première couche (40) est réalisée en polyuréthane avec une plus faible dureté et une plus haute résistance à l'abrasion qu'au moins une seconde couche (41), réalisée principalement en matière plastique polycarbonate, ladite au moins une seconde couche en matière plastique polycarbonate (41) étant adaptée à renforcer et à raidir ladite au moins une première couche (40), qui constitue une surface de contact principale (42) contre ladite surface (24).

2. Lame de raclage selon la revendication 1, dans laquelle la seconde couche (41) est réalisée en matière plastique polycarbonate.

3. Lame de raclage selon la revendication 1 ou 2, dans laquelle la couche en matière plastique polycarbonate de raidissement (41) est sensiblement enfermée par le polyuréthane (40).

4. Lame de raclage selon la revendication 1 ou 2, dans laquelle la couche en matière plastique polycarbonate (41) s'étend le long d'un grand côté (47, 48) de la lame de raclage (14), ledit grand côté étant détourné de la courroie de convoyeur et/ou tournée vers celle-ci, et la couche de polyuréthane constitue un noyau principal (40).

5. Lame de raclage selon l'une quelconque des revendications précédentes, dans laquelle la couche de matière plastique polycarbonate (41) est précintrée pour appliquer une force contre la surface qu'il s'agit de racler.

6. Lame de raclage selon l'une quelconque des revendications précédentes, dans laquelle l'embout (15) est biseauté de manière à être pressé sous un angle oblique contre la surface (24) à racler, et à ce que la majeure partie de la surface de contact (42) soit formée par la couche de matériau (40) plus tendre et plus résistant à l'abrasion.

7. Lame de raclage selon l'une quelconque des revendications précédentes, dans laquelle le matériau de ladite au moins une première couche (40) a une dureté allant de 50° Shore A, de préférence de 65° Shore A, jusqu'à 95° Shore A, et le matériau de ladite au moins une seconde couche (41) a une dureté allant de 75° Shore D à 85° Shore D.

8. Lame de raclage selon la revendication 7, dans laquelle le matériau de ladite au moins une première couche (40) a une dureté d'environ 70° Shore A.

9. Lame de raclage selon la revendication 7, dans laquelle le matériau de ladite au moins une première couche (40) a une dureté d'environ 78° Shore A.

10. Lame de raclage selon la revendication 7, 8 ou 9, dans laquelle le matériau de ladite au moins une seconde couche (41) a une dureté correspondant à environ 80° Shore D.

11. Lame de raclage selon l'une quelconque des revendications précédentes, dans laquelle la portion de la lame de raclage est réalisée avec deux couches (40, 41) et la couche (40) qui est adaptée, à l'utilisation de la lame de raclage, à former l'embout de raclage effectif (15) et qui est positionnée le plus loin de la surface (24) à racler, présente une surface extérieure en gradins ou en cannelures (47).

12. Lame de raclage selon l'une quelconque des revendications 1, 2 et 4 à 8, dans laquelle ladite portion de lame de raclage comprend trois couches (40, 41), dont la couche (40) qui est adaptée, à l'utilisation de la lame de raclage, à former l'embout de raclage effectif (15) est laminée entre deux couches (41), dont la couche (41) qui est adaptée, à l'utilisation de la lame de raclage, à faire face vers la surface (24) qu'il s'agit de racler, est réalisée du matériau présentant une plus faible résistance à l'abrasion et une plus haute dureté que le matériau de la couche (40) qui est adaptée à former l'embout de raclage effectif (15), et dont la couche qui, à l'utilisation de la lame de raclage, est adaptée à être positionnée au plus loin de la surface (24) à racler, est fabriquée d'un matériau qui ou bien présente une plus faible résistance à l'abrasion et une plus haute dureté que le matériau de l'embout de raclage effectif (15), ou bien est cassant et présente une plus faible résistance à l'abrasion que le matériau de l'embout de raclage effectif (15).

13. Lame de raclage selon l'une quelconque des revendications précédentes, comprenant en outre un indicateur d'usure et d'alignement (49).

14. Lame de raclage selon la revendication 13, dans laquelle l'indicateur d'usure et d'alignement comprend un certain nombre de rainures (43-46) disposées sur la lame de raclage (14) dans une direction depuis sa base de montage (16) jusqu'à son embout (15), au moins deux des points terminaux des rainures adjacentes à l'embout (15) de la lame de raclage étant agencés à la même distance depuis ledit embout (15).

15. Procédé de fabrication de lame de raclage pour racler des bandes de matériau, comprenant les étapes consistant à
a : disposer un élément de renforcement/raidissement en matière plastique polycarbonate dans un moule de coulée,
b : à un instant optionnel après avoir disposé la matière plastique polycarbonate, alimenter du polyuréthane dans ledit moule de coulée, le polyuréthane établissant une liaison avec le renforcement en matière plastique polycarbonate,
pour réaliser une structure cohérente.

16. Procédé selon la revendication 15, destiné à la fabrication d'une lame de raclage telle que revendiquée dans l'une quelconque des revendications 1 à 14.
